(19) Europäisches Patentamt

European Patent Office

Office européen des brevets

(11) **EP 1 535 807 A2**

(12) **EUROPEAN PATENT APPLICATION**

(43) Date of publication:
   **01.06.2005 Bulletin 2005/22**

(51) Int Cl.7: **B60R 21/01**

(21) Application number: **04078155.1**

(22) Date of filing: **18.11.2004**

| | |
|---|---|
| (84) Designated Contracting States:<br>**AT BE BG CH CY CZ DE DK EE ES FI FR GB GR**<br>**HU IE IS IT LI LU MC NL PL PT RO SE SI SK TR**<br>Designated Extension States:<br>**AL HR LT LV MK YU** | (72) Inventor: **Cashler, Robert J.**<br>**Kokomo, IN 46902 (US)** |
| (30) Priority: **25.11.2003 US 722714** | (74) Representative: **Denton, Michael John et al**<br>**Delphi European Headquarters,**<br>**64 avenue de la Plaine de France,**<br>**Paris Nord II,**<br>**BP 60059,** |
| (71) Applicant: **Delphi Technologies, Inc.**<br>**Troy, MI 48007 (US)** | **Tremblay-en-France**<br>**95972 Roissy Charles de Gaulle Cédex (FR)** |

(54) **Method and apparatus for deploying countermeasures in response to sensing an imminent vehicular collision**

(57)  An apparatus (12) for protecting occupants of vehicles (10) includes an object detector (28) monitoring a position of an object relative to a vehicle. A processor (32) is in communication with the object detector and determines a likelihood of a collision between the vehicle and the object based upon data received from the object detector. A deployment device (34) is in communication with the processor and deploys a physical safe- ty countermeasure (36) before the collision occurs if the processor determines that the collision is likely.

Fig.3.

EP 1 535 807 A2

**Description**

TECHNICAL FIELD

This invention relates generally to automotive occupant safety features, and, more particularly, to a novel system for deploying automotive occupant safety features.

BACKGROUND OF THE INVENTION

While the present invention is described, for illustrative purposes, as being applied to protection of occupants of an automobile that is involved in a collision, it will be understood that it can be employed to protect occupants of any type of vehicle, such as a boat, motorcycle, etc., that may be involved in a collision.

Safety devices are increasingly being used in vehicles to protect an occupant of a vehicle in the event of the vehicle being involved in a collision. For example, air bags are deployed in automobiles after a module in the vehicle senses that the vehicle has been involved in a collision. It is also known to use forward-looking radar on an automobile to detect the presence of an obstruction in the path of the vehicle. A visual or audial signal is then provided to the driver of the vehicle to alert him to the obstruction so that he might take evasive action. Due to the limits of human reaction-time, the forward-looking radar system alerts the driver to potential collisions that would occur exclusively one second or more after the driver is alerted. Alerting the driver to potential collisions that would occur less than one second after the driver is alerted would be of no use since the driver could not possibly react in time to mitigate the collision.

Thus, it is known to deploy a physical countermeasure to a collision, such as an air bag, after the collision has occurred. It is also known to deploy a non-physical countermeasure to a collision, such as a visual or audial signal to the driver, more than one second before the collision would occur. It is not known, however, to take any mitigating action within the second immediately before a collision is to occur. Nor is it known to take any physical mitigating action before a collision actually occurs.

What is needed in the art is a system of sensing that a vehicle may soon be involved in a collision, and deploying a safety countermeasure on the vehicle during the second immediately preceding the collision. What is also needed in the art is a system of sensing that a vehicle may soon be involved in a collision, and deploying a physical safety countermeasure on the vehicle before the collision actually occurs.

SUMMARY OF THE INVENTION

The present invention provides an apparatus and method for sensing a potential collision that an automobile may be involved in, and deploying safety countermeasures on the automobile during the one second time period immediately preceding the collision. The present invention also provides an apparatus and method for sensing a potential collision that an automobile may be involved in, and, before the collision actually occurs, deploying some physical change in the automobile that increases the safety of an occupant of the automobile or of an occupant of another vehicle that is involved in the collision. Moreover, the countermeasure may enable the collision to be avoided entirely.

According to one embodiment of the invention, an apparatus for protecting occupants of vehicles includes an object detector monitoring a position of an object relative to a vehicle. A processor is in communication with the object detector and determines a likelihood of a collision between the vehicle and the object based upon data received from the object detector. A deployment device is in communication with the processor and deploys a physical safety countermeasure before the collision occurs if the processor determines that the collision is likely.

According to another embodiment of the present invention, a method of protecting occupants of vehicles includes sensing that a vehicle is likely to be involved in a collision occurring within less than 1 second after a present time. A safety countermeasure is deployed before the collision and in response to the sensing step.

According to yet another embodiment of the present invention, a method of protecting occupants of vehicles includes sensing that a vehicle is likely to be involved in a collision. A physical safety countermeasure is deployed before the collision and in response to the sensing step.

An advantage of the present invention is that steps can be taken during the second of time immediately preceding a collision to improve the safety of occupants of vehicles that are involved in the collision.

Another advantage is that different physical countermeasures can be taken on the vehicle depending upon the likely severity of the collision and whether the collision might be avoided.

Yet another advantage is that the collision may be avoided entirely due to the countermeasures.

BRIEF DESCRIPTION OF THE DRAWINGS

The present invention will now be described, by way of example, with reference to the accompanying drawings, in which:

FIG. 1 is a plan view of a vehicle including one embodiment of an apparatus of the present invention heading toward a collision with another vehicle.

FIG. 2 is a plan view illustrating a positional relationship between the vehicles of FIG. 1.

FIG. 3 is a schematic block diagram of one embodiment of the vehicle of FIG. 1.

FIG. 4 is a flow chart of one embodiment of a method of the present invention.

FIG. 5 is a flow chart of one embodiment of substeps for processing the steps 404, 406, and 408 of FIG. 4.

FIG. 6 is a flow chart of one embodiment of substeps for processing the steps 512 and 514 of FIG. 5.

FIG. 7 is a schematic diagram defining the factor XOLC calculated in step 602 of FIG. 6.

Corresponding reference characters indicate corresponding parts throughout the several views. Although the drawings represent an embodiment of the present invention, the drawings are not necessarily to scale and certain features may be exaggerated in order to better illustrate and explain the present invention. The exemplifications set out herein illustrate an embodiment of the invention and such exemplifications are not to be construed as limiting the scope of the invention in any manner.

DESCRIPTION OF INVENTION

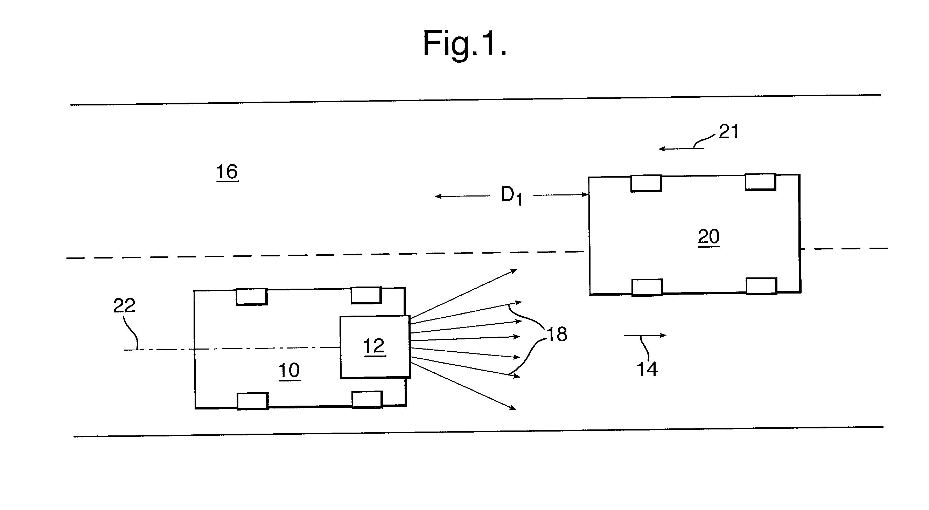

Referring now to the drawings, and particularly to FIG. 1, there is shown an automobile 10 including one embodiment of a safety system 12 of the present invention. As shown, automobile 10 is moving in a direction 14 along a road 16. Safety system 12 is capable of sensing an object or obstruction in its forward path, as schematically indicated by arrows 18.

More particularly, safety system 12 can sense an object such as a vehicle 20 in its path by use of radar or some other technology, such as infrared beams or sonar in the case of marine vehicles. Vehicle 20 may also be moving generally in direction 14, in a direction 21 generally opposite to direction 14, or in some direction generally transverse to directions 14, 21.

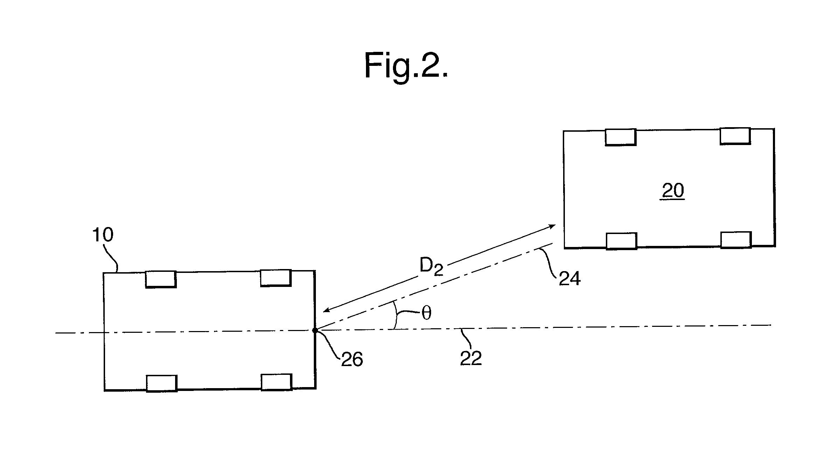

Safety system 12 can sense and continually track a position of vehicle 20 relative to vehicle 10. That is, safety system 12 can sense and continually track a distance and direction of vehicle 20 relative to vehicle 10. More particularly, system 12 can sense a distance $d_1$ between vehicles 10, 20 as well as an angular position of vehicle 20 relative to a longitudinal axis 22 (FIG. 2) of vehicle 10 and a point thereon. For example, system 12 can measure an angle $\theta$ between axis 22 and an imaginary line 24 joining vehicle 20 and a reference point 26 on vehicle 10 and on axis 22. It is possible to define the distance between vehicles 10, 20 as the length $d_2$ of line 24 rather than define the distance in the direction 14 parallel to axis 22, as is the case with distance $d_1$. Distance d and angle $\theta$ can be measured and updated by system 12 with a frequency on the order of 1000 updates per second.

Moreover, safety system 12 can sense the locations (distance and angle) of the outer boundaries of vehicle 20

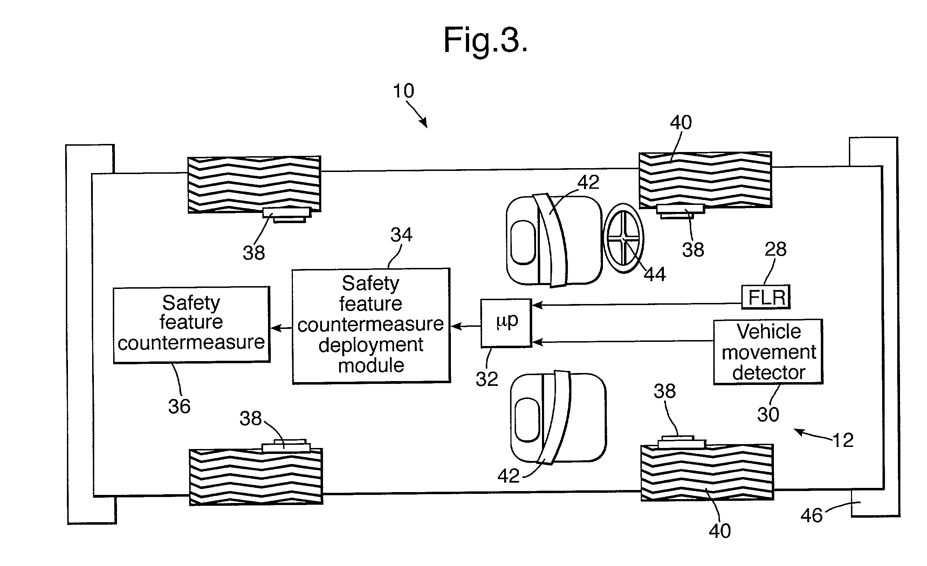

Safety system 12, which is shown in more detail in FIG. 3, includes a forward looking radar (FLR) module 28 and a vehicle movement detector 30 in communication with a processor 32. System 12 also includes a safety feature countermeasure deployment module 34 and a safety feature countermeasure 36. Module 34 is in communication with and controlled by processor 32. Safety feature countermeasure 36, in turn, is in communication with and controlled by module 34.

FLR module 28 in conj unction with processor 32 senses and continually tracks the distance d and angle $\theta$ of an object or obstruction such as vehicle 20, as described above. From the data collected by FLR module 28, processor 32 can calculate the position of vehicle 20 relative to vehicle 10. By virtue of receiving updates to the data collected by FLR module 28, processor 32 can also calculate the time rate of change of the position of vehicle 20 relative to vehicle 10. That is, processor 32 can calculate the closing rate, expressed in miles per hour or some equivalent units, between vehicles 10 and 20.

Vehicle movement detector 30 continually collects data indicative of the speed and direction, i.e., movement, of vehicle 10. By use of such data, vehicle movement detector 30 in conjunction with processor 32 senses and continually tracks the speed, acceleration, deceleration, direction, and rate of change of the direction of vehicle 10. Detector 30 can also sense whether one or more of brakes 38 are being applied and in what direction front wheels 40 are directed. From the data collected by detector 30, processor 32 can calculate or estimate a future path of vehicle 10, including a series of location coordinates and times of arrival of vehicle 10 at each of the coordinates. Processor 32 may also calculate a radius of curvature of the path of vehicle 10, and a yaw of vehicle 10 expressed in degrees per second. Furthermore, processor 32 may make a determination of whether the driver of vehicle 10 is attempting to make an evasive maneuver.

From the FLR data collected from FLR module 28 and the host vehicle movement data collected from vehicle movement detector 30, processor 32 can use an internal algorithm to determine whether vehicles 10 and 20 are likely to collide with each other, and, if so, a projected time of such collision or contact. If processor 32 determines that vehicles 10 and 20 are likely to collide, then processor 32 also determines whether safety feature countermeasure 36 should be deployed by module 34. Any such deployment of safety feature countermeasure 36 can occur before the projected time of contact as calculated by processor 32.

Safety feature countermeasure 36 can be of a physical variety. That is, safety feature countermeasure 36 can cause a physical change in vehicle 10, rather than merely transmit a signal to the driver of vehicle 10, for example.

The decision by processor 32 of whether safety feature countermeasure 36 should be deployed can depend upon many factors, such as the projected time of contact of the vehicles. That is, the deployment decision can depend upon how far into the future the contact occurs after a present time at which the deployment decision is made. Other factors in the deployment decision include the closing rate between the vehicles and the speed of the host vehicle 10 at the present time and/or at the projected time of collision or contact.

The above exemplary factors, i.e., the projected time of collision of the vehicles, the closing rate between the vehicles, and the speed of the host vehicle, may also be used by processor 32 to determine what type of safety feature countermeasure 36 should be deployed. Safety feature countermeasure 36 may be in the form of multiple countermeasures of various types, one or more of which may be chosen for deployment by processor 32 and/or deployment module 34 in response to an upcoming or imminent collision. For example, safety feature countermeasure 36 can be of a reversible type or an irreversible type.

Reversible types of countermeasures are generally characterized by being nonpermanent such that, after deployment, they can be easily placed back into the former state that they were in before being deployed. Examples of reversible countermeasures include applying one or more of brakes 38, controlling the steering, i.e., angle of direction, of front wheels 40, and tightening seat belts 42.

In contrast, irreversible types of countermeasures are generally characterized by being more permanent such that, after deployment, they cannot be easily placed back into the former state that they were in before being deployed. Examples of irreversible countermeasures include inflating an air bag 44 and changing a height of a bumper 46 on vehicle 10. The lowering of a bumper 46 may be particularly suitable in the case of vehicle 10 being a truck, wherein it may be desirable to lower bumper 46 to the same level as the bumper of a vehicle 20 with which vehicle 10 will collide.

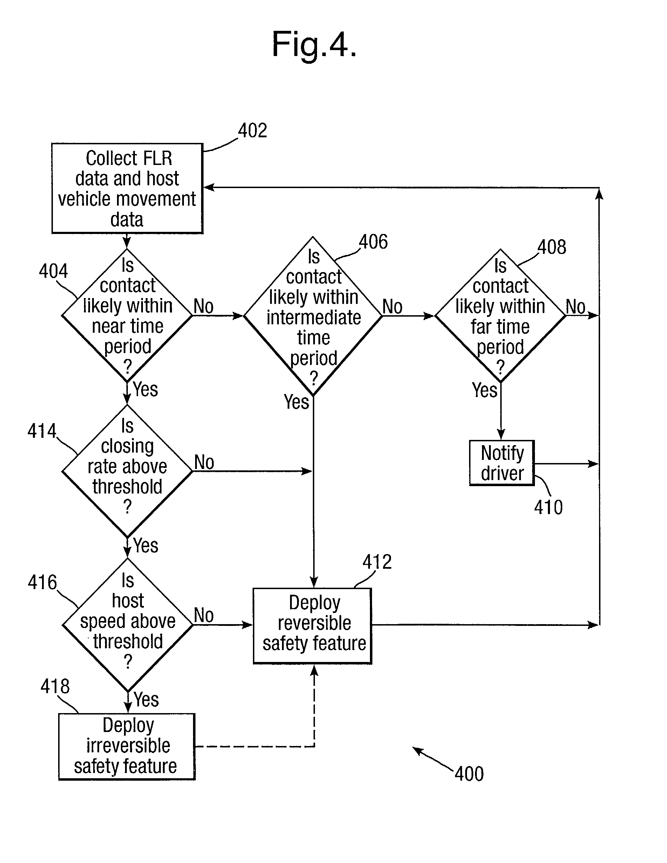

One embodiment of a method 400 of the present invention of protecting occupants of vehicle 10 and/or vehicle 20 in the event of a collision between vehicles 10, 20 is illustrated in FIG. 4. In a first step 402, forward-looking radar data and host vehicle movement data are collected. In the case of safety system 12 of FIG. 3, processor 32 can collect forward-looking radar data from FLR module 28 and can collect host vehicle movement data from vehicle movement detector 30. In a next step 404, it is decided whether contact is likely between the host vehicle and an obstruction within a near time period. In one embodiment, processor 32 can determine whether contact between vehicles 10, 20 is likely within a time period approximately between 0.3 second and 0.5 second after a present time at which processor 32 makes the determination.

If processor 32 determines that contact is likely before the near time period, it may be too late for a safety feature countermeasure 36 to do any good, and thus countermeasure 36 is not deployed. In some embodiments, however, the near time period may extend to the present time, such that it is never considered "too late" to deploy some type of countermeasure 36.

If it is determined in step 404 that contact is not likely within the near time period, then it is determined in step 406 whether contact is likely within an intermediate time period. In one embodiment, processor 32 can determine whether contact between vehicles 10, 20 is likely within a time period approximately between 0.5 second and 1.0 second after a present time at which processor 32 makes the determination.

If it is determined in step 406 that contact is not likely within the intermediate time period, then it is determined in step 408 whether contact is likely within a far time period. In one embodiment, processor 32 can determine whether contact between vehicles 10, 20 is likely more than 1.0 second after a present time at which processor 32 makes the determination.

In each of steps 404, 406 and 408, it is determined whether contact is likely, i.e., has a probability of greater than 50%. However, in a preferred embodiment, processor 32 can determine in each of steps 404, 406 and 408 whether contact between vehicles 10, 20 is imminent, e.g., has a probability exceeding 99%, within the corresponding time period. Of course processor 32 can use any other level of probability as the threshold value in any or all of steps 404, 406 and 408.

If it is determined in step 408 that contact is likely within the far time period, such as more than one second in the future, then processor 32 may deploy a non-physical safety feature countermeasure. For example, the driver of vehicle 10 may be notified (step 410) via a visual and/or audial cue of the likelihood of contact between vehicles 10 and 20. Thus, the driver can be given the opportunity to make an evasive maneuver or take some other action to mitigate or avoid a collision with vehicle 20. After the driver has been notified in step 410, operation is returned to step 402 where more FLR data and host vehicle movement data is collected.

If it is determined in step 406 that contact is likely within the intermediate time period, such as between 0.5 and 1.0 second in the future, then a reversible safety feature countermeasure can be deployed (step 412). For example, processor 32 may instruct deployment module 34 to deploy one or more physical and reversible safety feature countermeasures 36, such as applying one or more of brakes 38, controlling the steering of front wheels 40, and/or tightening seat belts 42. After the reversible safety feature has been deployed in step 412, operation is returned to step 402 where more FLR data and host vehicle movement data is collected.

If it is determined in step 404 that contact is likely within the near time period, such as between 0.3 and 0.5 second in the future, then it is further determined, in step 414, whether the closing rate between the host vehicle and the identified obstruction is above a threshold value. For example, processor 32 may determine from the FLR data and the host vehicle data whether the closing rate between vehicles 10, 20 is greater than five miles per hour.

If it is determined in step 414 that the closing rate is not above the threshold, then a reversible safety feature countermeasure can nevertheless be deployed (step 412) since it has been determined in step 404 that contact is likely within the near time period. For example, processor 32 may instruct deployment module 34 to deploy one or more physical and reversible safety feature countermeasures 36, such as applying one or more of brakes 38, controlling the steering of front wheels 40, and/or tightening seat belts 42. After the reversible safety feature has been deployed in step 412, operation is returned to step 402 where more FLR data and host vehicle movement data is collected.

Conversely, if it is determined in step 414 that the closing rate is above the threshold, then it is further determined, in step 416, whether the speed of the host vehicle is above a threshold value. For example, processor 32 may determine from the host vehicle data whether the speed of host vehicle 10 is greater than four miles per hour.

If it is determined in step 416 that the host speed is not above the threshold, then a reversible safety feature countermeasure can nevertheless be deployed (step 412) since it has been determined in step 404 that contact is likely within the near time period. For example, processor 32 may instruct deployment module 34 to deploy one or more physical and reversible safety feature countermeasures 36, such as applying one or more of brakes 38, controlling the steering of front wheels 40, and/or tightening seat belts 42. After the reversible safety feature has been deployed in step 412, operation is returned to step 402 where more FLR data and host vehicle movement data is collected.

Conversely, if it is determined in step 416 that the host speed is above the threshold, then an irreversible safety feature countermeasure can be deployed (step 418) since it has been determined in step 404 that contact is likely within the near time period, it has been determined in step 414 that the closing rate is above the threshold, and it has been determined in step 416 that the host speed is above its respective threshold. For example, processor 32 may instruct deployment module 34 to deploy one or more physical and irreversible safety feature countermeasures 36, such as lowering bumper 46 and/or inflating air bag 44.

After the irreversible safety feature has been deployed in step 418, it is possible to deploy any reversible safety feature countermeasures that have not already been deployed in earlier steps (step 412). Such substantially simultaneous deployment of reversible and irreversible countermeasures may be possible and desirable in cases where an obstruction appears so quickly that, although contact within the near time period can be detected, contact with the intermediate or far time periods could not be previously detected.

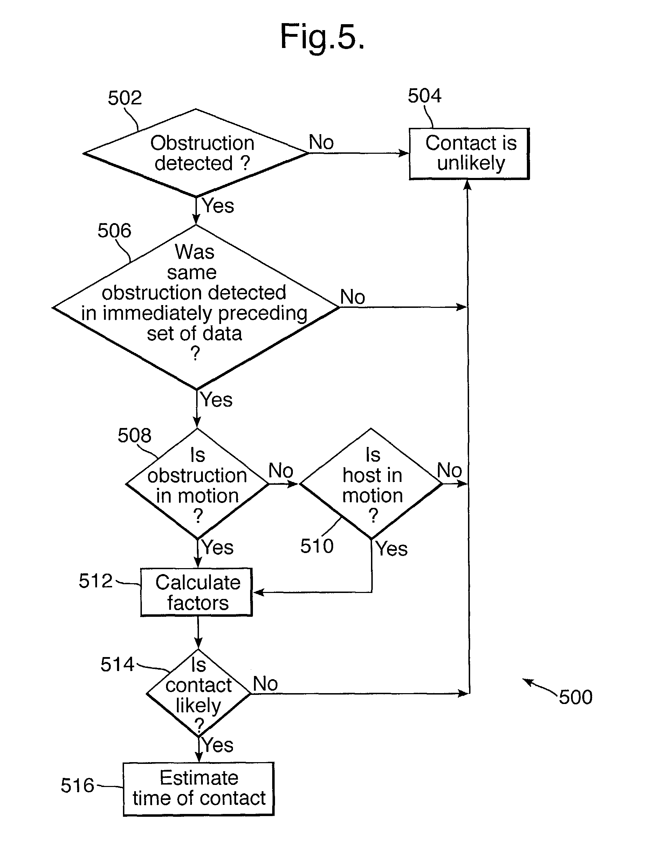

One embodiment of the details of steps 404, 406, 408, taken as a group, is illustrated in FIG. 5 as a process 500 that can be performed by processor 32. After the FLR data and host vehicle data is collected in step 402, processor 32 can analyze the data and determine whether an obstruction, such as vehicle 20, is detected (step 502). If an obstruction is not detected, then contact is not likely (step 504). That is, contact is not likely in the near time period, the intermediate time period, or the far time period in steps 404, 406, 408, respectively, and operation returns to step 402.

Conversely, if it is determined in step 502 that an obstruction is detected, then it is determined in step 506 whether the same obstruction was detected in the immediately preceding set of FLR data that was previously collected. If not, then it is likely that the positive detection in step 502 was due to signal noise, and that no obstruction is actually present. Thus, processor 32 determines for the time being that contact is unlikely (step 504) and operation returns to step 402 to collect more data.

If analysis of the new data still indicates the presence of an obstruction, then it is determined in step 506 that the same obstruction was detected in the immediately preceding set of data, and that the obstruction is genuine. It is then determined in step 508 whether the detected obstruction is in motion. Processor 32 can analyze both the FLR data and the host vehicle movement data to determine whether the obstruction is in motion. If the obstruction is not in motion, then it is determined in step 510 from the host vehicle movement data whether the host, such as vehicle 10 is in motion. If not, i.e., it is determined that neither the obstruction nor the host is in motion, then it is determined that contact is unlikely (step 504) and operation is returned to step 402.

Conversely, if it is determined that either the obstruction or the host is in motion in steps 508, 510, respectively, then processor calculates one or more factors to determine whether contact between the host and the obstruction is likely (step 512). For example, processor can calculate from the FLR data and the host vehicle movement data the speed, acceleration, deceleration, direction, and rate of change of the direction of both vehicles 10 and 20. Other factors include whether one or more of brakes 38 are being applied, in what direction front wheels 40 are directed, a radius of curvature of the paths of vehicles 10, 20, and a yaw of vehicle 10. These exemplary factors are merely illustrative, and are not meant to be all-inclusive. Other factors may be identified that are indicative of whether contact will occur.

In a next step 514, it is determined whether contact is likely. For example, processor 32 can input the factors calculated in step 512 into an algorithm that determines whether contact between vehicles 10 and 20 is likely. There may be other factors used by the algorithm that are not calculated by processor 32 but rather are stored in processor 32 or in an associated memory device (not shown). An example of such non-calculated, stored factors are data defining the outer boundaries of the body of vehicle 10.

Generally, processor 32 can predict the future paths of vehicles 10, 20 and determine whether the predicted paths intersect in space and time. More particularly, processor 32 can determine whether the outer boundaries of vehicles 10, 20 will intersect in space and time. If processor 32 determines that contact is not likely, i.e., unlikely (step 504), then operation returns to step 402 for the collection of more data. If, however, processor 32 determines that contact is likely, then processor 32 uses the calculated factors to estimate the time of contact (step 516). The estimated time of contact determines whether contact is likely in the near time period, intermediate time period, or the far time period, i.e., whether a result of any of steps 404, 406, 408 is in the affirmative.

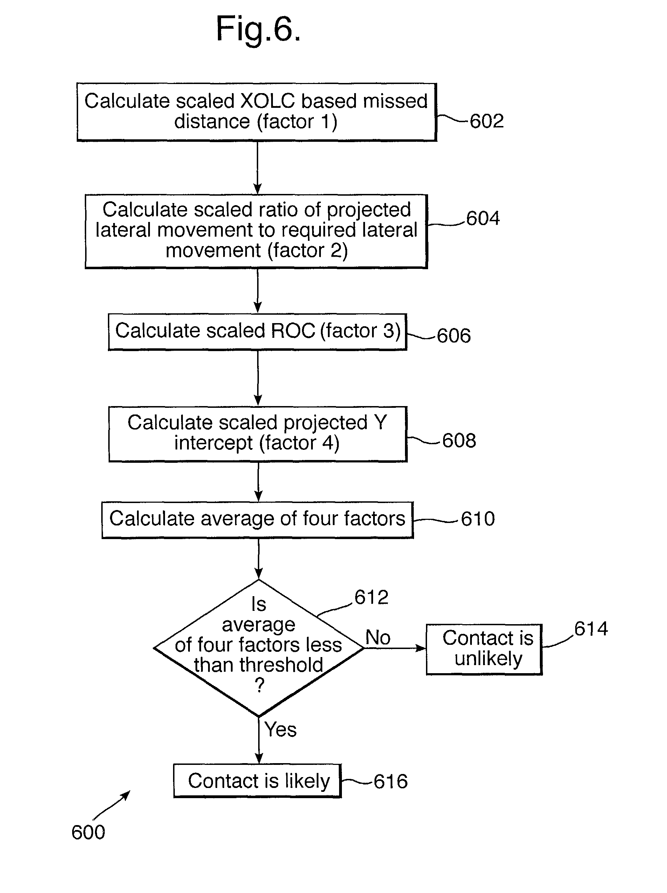

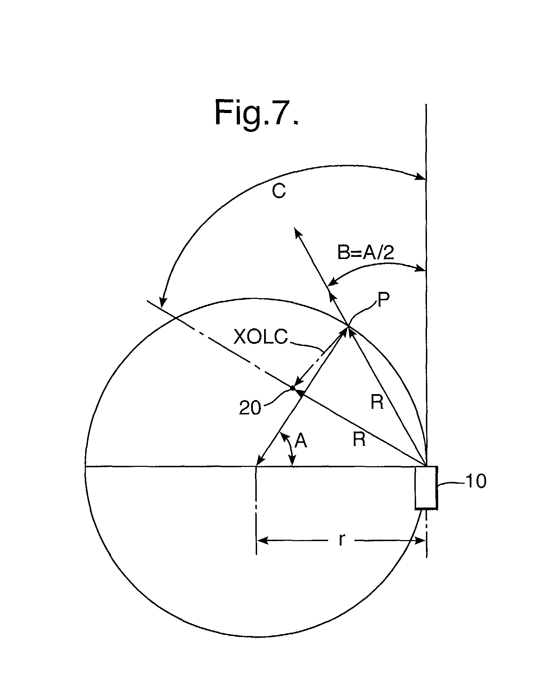

One embodiment of the details of steps 512, 514, taken as a group, is illustrated in FIG. 6 as a process 600 that can be performed by processor 32. A plurality of factors related to movements of the host vehicle and/or the target object are calculated. More particularly, in step 602, a first factor, scaled Offset From Lane Center (XOLC) Based Missed Distance, is calculated. The XOLC Based Missed Distance is calculated from the current lane position of a target and the expected target lane movement based upon the XOLC rate and time to impact. The missed distance is the distance from the center of the host vehicle to where the target is expected to be when it reaches the host. FIG. 7 illustrates how XOLC is defined and calculated. A path angle B of a vehicle 10 relative to a target object or vehicle 20 is shown in FIG. 7, wherein vehicle 10 is travelling in a circular path with a radius of curvature (ROC) r and vehicles 10, 20 are separated by a distance or range R. A point P on the circular path a distance R from vehicle 10 is identified. Since an angle A expressed in radians can be approximated as R/r, path angle B expressed in radians can be approximated as A/2. Now, an offset from lane center (XOLC) can be approximated as distance R multiplied by an angular difference, expressed in radians, between a center filtered angle C and path angle B. In equation form,

$$XOLC = R * (C - B).$$

This distance XOLC is related to the host vehicle's width via the missed distance threshold. If the missed distance equals half the vehicle's width it will be right at the edge of the vehicle and receive a scaled Factor 1 rating of 50. Beyond the edge of the vehicle the scaled rating shall be 51 to 100 based upon how far the vehicle missed distance is, and 0 to 49 if the missed distance falls within the width of the vehicle. The ratio is converted 0 to 100 and rounded to the nearest integer. In equation form,

$$Missed\ Distance = XOLC + XOLC\ Rate * Time\ to\ Contact.$$

$$Rating = Missed\ Distance\ /\ Vehicle\ Width.$$

In step 604, a second factor, Projected lateral movement to required lateral movement, is calculated. The projected lateral movement to required lateral movement ratio represents how far the vehicle must move laterally to clear the target to how far it is expected to move. The projected lateral movement is an estimation of how far to the right or left the host is expected to move given the current path angle and amount of distance to the target. The required lateral movement is how far right or left the host vehicle must move to place the target at the edge of the vehicle, given the target's current lateral position. The ratio is converted to a scaled value between 0 and 100 and is rounded to the nearest integer. In equation form,

$$Projected\ Lateral\ movement = Target\ Range * Since\ Raw\ Path\ Angle.$$

$$Raw\ Path\ Angle = 0.5 * Range\ /\ Unfiltered\ ROC\ converted\ to\ radians.$$

$$Required\ Lateral\ movement = ½\ vehicle\ width\ -\ (the\ target's\ current$$

lateral position).

Measure 2 = (Proj. Lateral Movement - Req. Lateral Movement) /-

Vehicle Width.

In step 606, a third factor, Radius of Curvature (ROC), is calculated. The ROC and target position is evaluated to determine if the host vehicle is executing an evasive maneuver or not, and, if so, is the host moving into or away from the target. Based upon the unfiltered ROC and the position of the target, the algorithm determines if the host is turning into or away from the target. Then, based upon the ROC, it is determined if the host vehicle is executing an evasive maneuver and how aggressive the maneuver is. If the target's current position is beyond the edge of the host, then the scaled Factor 3 rating is set to 100.

If the ROC is above a threshold, such as 500 meters, then the host vehicle is classified as travelling straight. If so, Factor 3 is the ratio of required lateral movement to the target's edge. The ratio is converted or scaled to a value between 0 and 100 and rounded to the nearest integer.

If the ROC is less than a calibrated threshold, such as 200 meters, then the host is classified as executing an aggressive maneuver. If the target is in front of the host and within its width, Factor 3 is set to 200. Otherwise, the Host is classified as curving and the rating is based upon whether it is moving into or away from the target. If the required movement is small, such as 0.1 meter, and the host is moving into the target, then the scaled rating is set to 0, full deploy. If the host is moving away from the target, then the scaled rating is set to 100. If the required move is larger than 0.1 meter, then the scaled rating is set to 50, which represents a neutral condition.

In step 608, a fourth factor, Projected Y Intercept, is calculated. Factor 4 uses the last five XY positions of a target to project a line to where the target and host will pass each other. The Y intercept is then related to the vehicle width to give the Factor 4 value. The ratio is converted or scaled to a value between 0 and 100 and rounded to the nearest integer. A linear regression is used to determine the Y intercept. In equation form,

$$\text{Slope} = [N * \Sigma(XY) - EX * \Sigma Y] / [N * \Sigma(X^2) - \Sigma(X)^2],$$

Intercept = (EY - Slope * ΣX) / N, wherein X and Y are the last five X and Y positions and N = 5. Also, the slope is reversed to account for the non-standard coordinate system used. The Y directions are opposite the standard right hand rule coordinate system. If the slope is close to 0.0, then the Y intercept is set to the last Y position. Factor 4 is then the ratio of the Y intercept to the vehicle width. The ratio is converted or scaled to a value between 0 and 100 and rounded to the nearest integer.

In step 610, an average of the four factors is calculated as a number between 0 and 100. This average is known as a decision rating. Of course, the decision rating can be based on a formula other than an average of the factors, such as a weighted average. The decision rating can be smoothed by averaging it with the last decision rating to provide the decision rating used to evaluate the threat level.

In step 612, it is determined whether the decision rating is less than a threshold value, such as 50. If not, then it is determined that contact between the host and the target is unlikely (step 614). If the decision rating is less than the threshold, then it is determined that contact is likely (step 616).

The embodiments disclosed above are not intended to be exhaustive or to limit the invention to the precise forms disclosed in the detailed description. Rather, the embodiments have been chosen and described so that others skilled in the art may utilize their teachings.

Although described in the exemplary embodiments, it will be understood that various modifications may be made to the subject matter without departing from the intended and proper scope of the invention. For example, factors other than time of contact, closing rate, and host vehicle speed may be used in deciding whether to deploy countermeasures and what types of countermeasures to deploy. Further, the safety countermeasures themselves, both reversible and irreversible, may take various forms other than described herein.

**Claims**

**1.** An apparatus (12) for protecting occupants of vehicles (10, 20), said apparatus comprising:

an object detector (28) configured to monitor a position of an object relative to a vehicle;

a processor (32) in communication with said object detector and configured to determine a likelihood of a collision between the vehicle and the object based upon data received from the object detector; and

a deployment device (34) in communication with said processor and configured to deploy a physical safety countermeasure (36) before the collision occurs if said processor determines that the collision is likely.

2. The apparatus of claim 1, wherein said processor is configured to determine a likelihood of a collision between the vehicle and the object occurring within less than 1 second after a present time.

3. The apparatus of claim 1, wherein said deployment device is configured to:

deploy at least one of an irreversible physical safety countermeasure and a reversible physical safety countermeasure before the collision occurs if said processor determines that the collision is likely within a first time period after a present time; and

deploy a reversible physical safety countermeasure before the collision occurs if said processor determines that the collision is likely within a second time period after the present time.

4. The apparatus of claim 3, wherein said at least one of an irreversible physical safety countermeasure and a reversible physical safety countermeasure comprises an irreversible physical safety countermeasure if at least one of:

a closing rate between the vehicle and the object exceeds a threshold rate; and

a speed of the vehicle is above a threshold speed.

5. The apparatus of claim 3, wherein the first time period comprises a time period approximately between 0.3 and 0.5 second after the present time.

6. The apparatus of claim 3, wherein the second time period comprises a time period approximately between 0.5 and 1.0 second after the present time.

7. The apparatus of claim 1, wherein said object detector includes a radar-based device.

8. The apparatus of claim 1, wherein said deployment device is configured to deploy the physical safety countermeasure before the collision occurs if said processor determines that a probability of the collision is greater than 99%.

9. The apparatus of claim 1, wherein the physical safety countermeasure is configured to at least one of change a height of a bumper (46) on the vehicle, tighten a seat belt (42) on the vehicle, apply a brake (38) on the vehicle, inflate an air bag (44) on the vehicle, and control steering of wheels (40) of the vehicle.

10. The apparatus of claim 1, further comprising a vehicle movement detector (30) in communication with said processor and configured to monitor movement of the vehicle, said processor being configured to determine a likelihood of a collision between the vehicle and the object based upon data received from the vehicle movement detector.

11. A method of protecting occupants of vehicles (10, 20), comprising the steps of:

sensing that a vehicle is likely to be involved in a collision occurring within less than 1 second after a present time; and

deploying a safety countermeasure (36) before the collision and in response to said sensing step.

12. The method of claim 11, wherein the sensing step includes monitoring a position of an object relative to the vehicle and sensing that the vehicle is likely to be involved in a collision with the object.

13. The method of claim 11, wherein the sensing step includes monitoring movement of the vehicle.

14. The method of claim 13, wherein the monitoring step includes monitoring at least one of vehicle speed, rate of change of vehicle speed, direction of vehicle movement, and rate of change of direction of vehicle movement.

15. The method of claim 11, wherein the deploying step includes at least one of changing a height of a bumper (46) on the vehicle, tightening a seat belt (42) on the vehicle, applying a brake (38) on the vehicle, inflating an air bag (44) on the vehicle, and controlling steering of wheels (40) of the vehicle.

16. A method of protecting occupants of vehicles (10, 20), comprising the steps of:

    sensing that a vehicle is likely to be involved in a collision; and
    deploying a physical safety countermeasure (36) before the collision and in response to said sensing step.

17. The method of claim 16, wherein said sensing step comprises sensing that the vehicle is likely to be involved in a collision that will occur within less than 1 second after a time of the sensing.

18. The method of claim 16, wherein the sensing step includes:

    sensing that the vehicle is likely to be involved in a collision with an object; and
    monitoring a rate of change of a position of the object relative to the vehicle.

19. The method of claim 16, wherein said deploying step includes choosing at least one of a reversible physical safety countermeasure and an irreversible physical safety countermeasure dependent upon a time at which the collision is likely to occur.

20. The method of claim 16, wherein the sensing step includes:

    sensing that the vehicle is likely to be involved in a collision with an object; and
    monitoring movements of both the vehicle and the object.

21. The method of claim 16, wherein the sensing step includes:

    calculating a plurality of factors related to movements of at least one of the vehicle and an object;
    calculating a decision rating based upon the factors; and
    comparing the decision rating to a threshold value.

22. The method of claim 21, wherein the decision rating is calculated as an average of the factors.

23. The method of claim 21, wherein the factors include at least one of an offset from lane center based missed distance (XOLC), a ratio of projected lateral movement to required lateral movement, a radius of curvature of the vehicle, and a projected Y intercept.

Fig.1.

# Fig.2.

20

10

D₂

24

θ

26

22

Fig.3.

# Fig.4.

```
         ┌──────────────┐  402
         │  Collect FLR │
         │ data and host│
         │vehicle movement│
         │     data     │
         └──────┬───────┘

         ◇ Is                    ◇ Is          406        ◇ Is        408
    404  contact                 contact                  contact
         likely within    No     likely within   No       likely within   No
         near time      ────►     intermediate  ────►      far time     ────►
         period                   time                     period
         ?                        period                   ?
            │                     ?                           │
            │Yes                     │Yes                      │Yes
            ▼                        │                         ▼
         ◇ Is                        │                   ┌──────────┐
    414  closing                     │                   │  Notify  │
         rate above      No          │                   │  driver  │  ────►
         threshold    ──────────────►│                   └──────────┘
         ?                           │                        410
            │                        │
            │Yes                     ▼
            ▼                  ┌──────────────┐  412
         ◇ Is                  │   Deploy     │
    416  host                  │  reversible  │
         speed above   No      │ safety feature│ ──────────────►
         threshold  ──────────►│              │
         ?                     └──────────────┘
            │                        ▲
            │Yes                     ┊
            ▼                        ┊
    418 ┌──────────┐                 ┊
        │  Deploy  │                 ┊
        │ irreversible├┈┈┈┈┈┈┈┈┈┈┈┈┈┈┘
        │safety feature│
        └──────────┘
```

400

# Fig.5.

502 → **Obstruction detected ?**
— No → 504 → **Contact is unlikely**
— Yes ↓

506 → **Was same obstruction detected in immediately preceding set of data ?**
— No →
— Yes ↓

508 → **Is obstruction in motion ?**
— No → 510 → **Is host in motion ?**
— No →
— Yes ↓

512 → **Calculate factors**

514 → **Is contact likely ?**
— No →
— Yes ↓

516 → **Estimate time of contact**

500

# Fig.6.

Calculate scaled XOLC based missed distance (factor 1) ──602

↓

Calculate scaled ratio of projected lateral movement to required lateral movement (factor 2) ──604

↓

Calculate scaled ROC (factor 3) ──606

↓

Calculate scaled projected Y intercept (factor 4) ──608

↓

Calculate average of four factors ──610

↓

Is average of four factors less than threshold ? ──612

No → Contact is unlikely ──614

Yes ↓

Contact is likely ──616

600

# Fig.7.